# EUROPEAN PATENT APPLICATION

(11) **EP 4 292 910 A1**
(43) Date of publication of application: **20.12.2023**
(21) Application number: 23179287.0
(22) Date of filing: 14.06.2023
(51) Int. Cl.: B62D 33/03, B60P 1/16, B60P 1/26

(54) **CONTAINMENT SYSTEM FOR PANEL OF A COMMERCIAL VEHICLE BOX**

(30) Priority: 16.06.2022 IT 202200012800
(71) Applicant: IVECO S.P.A., 10156 Torino (IT)
(72) Inventor: GEROMETTA, Davide Gianni, 10156 TORINO (IT)
(74) Representative: Studio Torta S.p.A.

(57) **Abstract**

A box (5) for a vehicle (1), comprising a platform (6) configured to be carried by a chassis (2) of the vehicle and extending along a longitudinal axis (A), a pair of side panels (7) parallel to the axis (A), a pair of front and rear panels (7') transversal to the axis (A), the panels (7', 7") and said platform (6) delimiting a space (5') configured to transport goods, and being carried by said platform (6) by means of at least one hinge (9) configured to allow the rotation of an edge of the panels (7, 7') around a hinge axis respectively parallel or transversal to the axis (A), the box (5) comprising a containment system (10) actuatable to limit the stroke of the panel (7, 7') in at least one predefined angular position around the axis of rotation of the hinge (9).

## Description

### CROSS-REFERENCE TO RELATED APPLICATIONS

This patent application claims priority from Italian patent application no. 102022000012800 filed on June 16, 2022, the entire disclosure of which is incorporated herein by reference.

### TECHNICAL FIELD

The present invention relates to a containment system for a panel of a vehicle.

The present invention is preferably, although not exclusively, applied to the containment of a panel of a commercial vehicle box. In the following, reference will be made to such application by way of example.

### STATE OF THE PRIOR ART

Regulations R151, R158, R159 provide for vehicles to be equipped with devices configured to signal the presence of people and/or obstacles in the proximity of the vehicle, in order to prevent dangerous accidents.

Such devices, known as "ADAS", Advanced Driver Assistance Systems, comprise sensors, such as for example RADAR, LIDAR, or cameras, placed along at least part of the perimeter of the vehicle.

Normally, such devices are carried by portions integral with the chassis placed below the vehicular plane. Should the vehicle be provided with a box, this arrangement becomes critical.

In fact, the boxes define a space configured to house goods delimited by a platform carried by the chassis and by a plurality of panels.

Such panels are normally hinged with respect to the platform so as to enable the opening thereof for easily accessing the aforementioned space for putting or collecting goods.

Furthermore, the boxes are connected to the chassis so as to enable the overturning on one of the lateral or rear sides so as to facilitate the loading or unloading of the goods into/from the aforementioned space.

Both in a standard configuration and in an overturned configuration, it is possible for the side panel to knock against the chassis, i.e. below the platform to which it is hinged.

If in the traditional vehicles such problem is felt but causes outcomes which are not very serious, in the vehicles equipped with ADAS systems the collision of the panel could damage the aforementioned sensor means.

The damaging of the sensor means, besides not allowing driving the vehicle because it would not be compliant with the aforementioned rules, is also source of economic damage given the cost of such sensors.

Therefore, the need is felt to allow having versatile boxes which allow loading/unloading goods without however risking ruining the ADAS sensors of the vehicle.

The object of the present invention is to satisfy the aforementioned needs in an optimized and cost-effective manner.

### SUMMARY OF THE INVENTION

The aforementioned object is achieved by a vehicle provided with a box as claimed in the appended claims.

### BRIEF DESCRIPTION OF THE DRAWINGS

In order to better understand the present invention, a preferred embodiment is described in the following, by way of non-limiting example and with reference to the accompanying drawings wherein:
- Figure 1 is a side view of a vehicle comprising a box according to the invention;
- Figure 2 is a rear view of the vehicle of Figure 1;
- Figure 3 is a top view of the vehicle of Figure 1;
- Figure 4 is a schematic view, with parts removed for clarity and partly sectioned, of a rear view of the vehicle of Figure 1 in an operating condition;
- Figure 5 is an enlarged perspective view, with parts removed for clarity, of a system of the vehicle according to the invention in a first operating condition;
- Figure 6 is an enlarged perspective view, with parts removed for clarity, of a system of the vehicle according to the invention in a first operating condition;

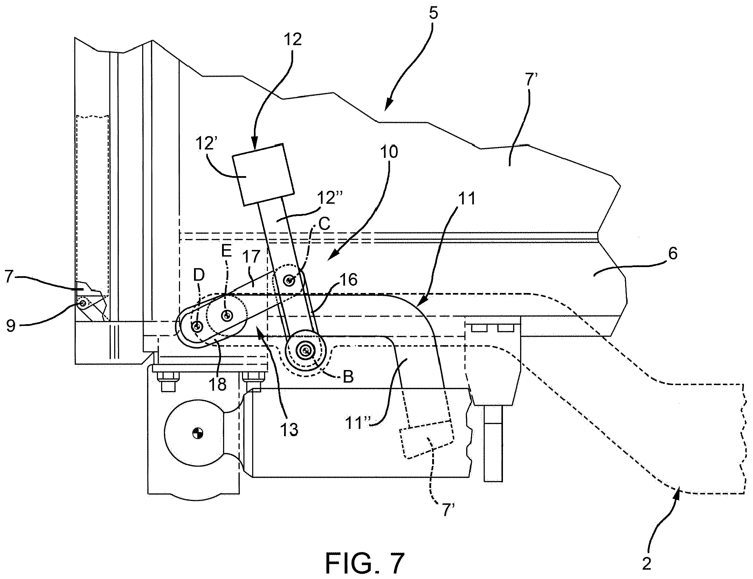

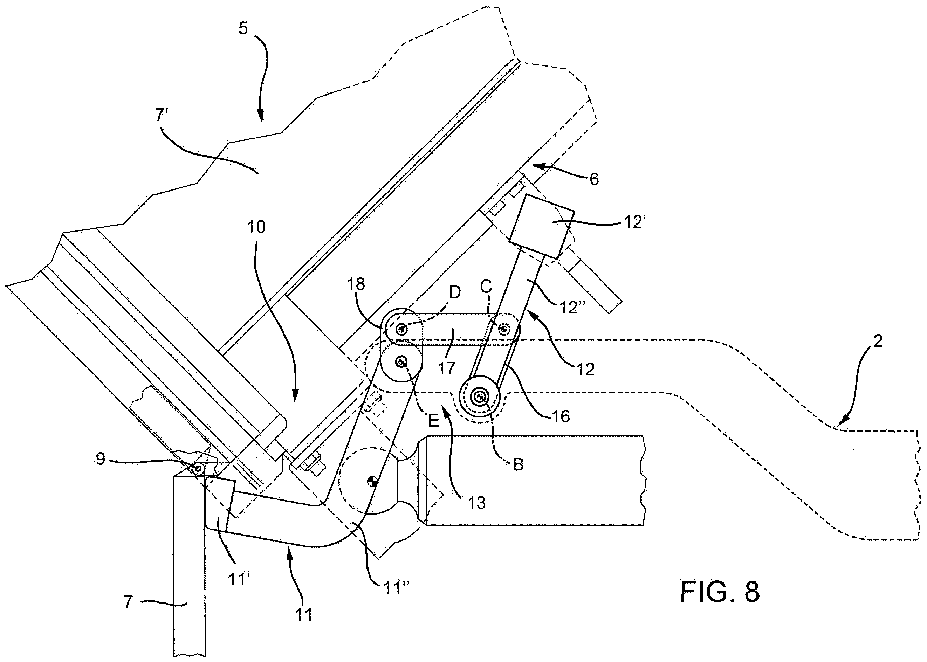

- Figures 7 and 8 are rear views, with parts removed for clarity, representing the operating conditions of Figures 5 and 6.

### DETAILED DESCRIPTION OF THE INVENTION

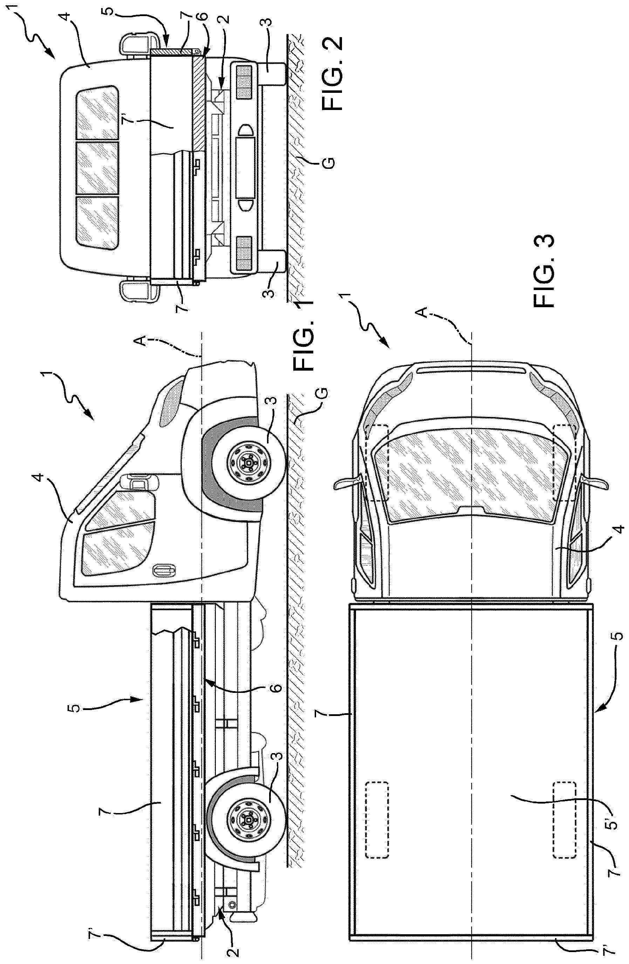

In Figures 1 to 3, a vehicle 1 of commercial type is illustrated. In particular, the vehicle 1 comprises a chassis 2 extending along an axis A and moving with respect to the ground G by means of a plurality of wheels 3.

Without going into further details, the vehicle 1 can be provided with sensor means (not illustrated) configured to detect obstacles in the proximity of the vehicle 1 and carried on at least part of the perimeter of the chassis 2. Since such sensor means are known, they will not be further described for the sake of brevity.

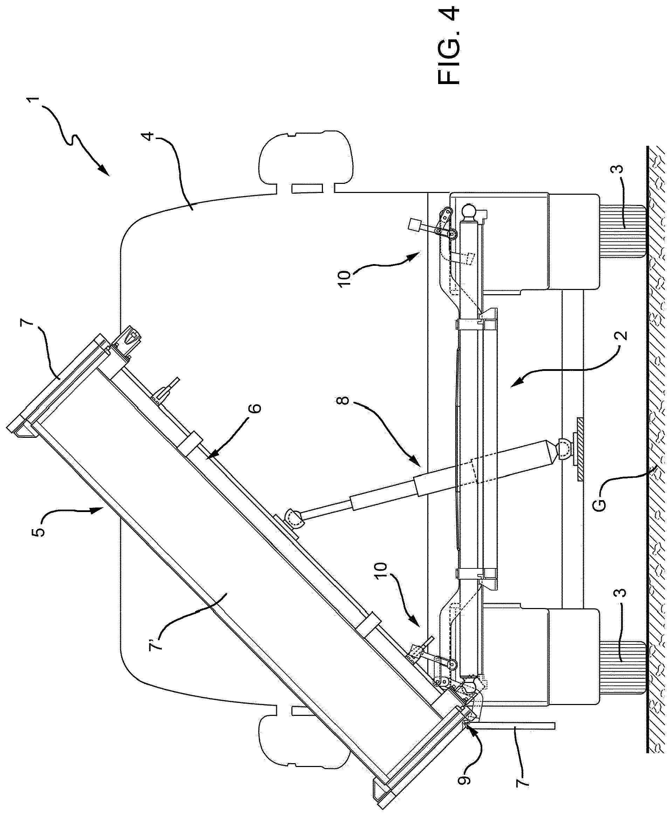

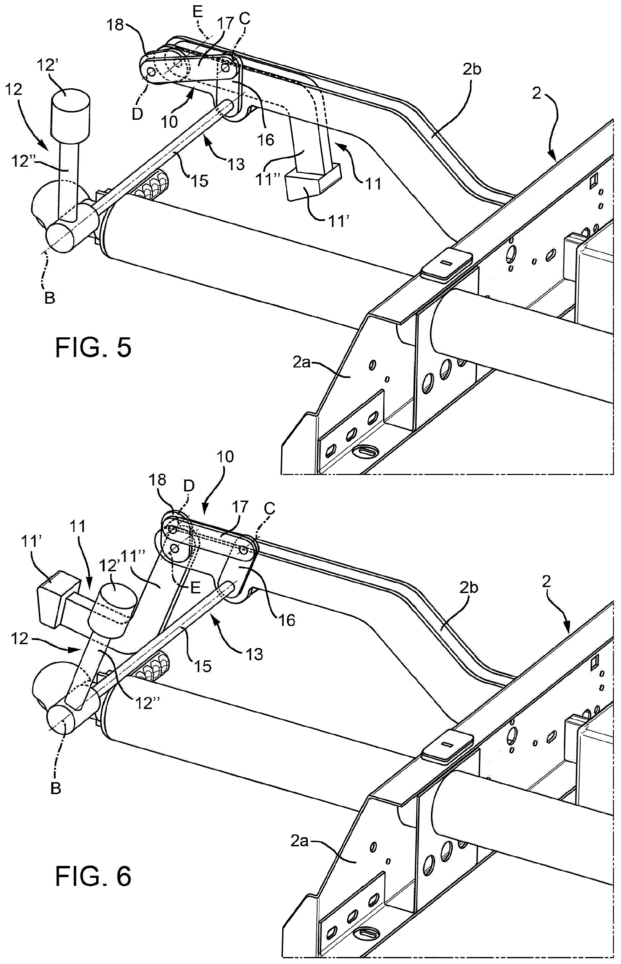

The vehicle 1 comprises a driving cab 4 and a box 5 carried by the chassis 1. As is better visible in Figures 4 and 5, the box 5 essentially comprises a platform 6 and a plurality of panels 7, 7' extending from the platform 6 on the opposite side with respect to the ground G.

The platform 6 and the plurality of panels 7, 7' delimit between each other a space 5' configured to house goods. In particular, the panels comprise a pair of side panels 7 and a front and rear panel 7', as known per se.

The box 5, in particular the platform 6, is carried by the chassis 2 so that it can be overturned with respect to the longitudinal sides of the chassis 1, i.e. around a hinge axis parallel to the axis A or with respect to the rear side of the chassis 1, i.e. around a hinge axis transversal to the axis A.

In particular, in order to be carried in the overturning manner on three sides as above-described, the vehicle 1 comprises actuating means 8 not further described for the sake of brevity and schematized in the accompanying drawings.

As known per se, the panels 7, 7' are carried by the platform 6 in a movable manner, advantageously by means of one or more hinges 9 configured to enable the rotation of the bottom end portion of the panel 7, 7' with respect to the outer edge of the platform 6, thus around an axis of rotation parallel or transversal to the longitudinal axis A of the vehicle 1.

The box 5 can also comprise locking means, not illustrated, configured to allow or not allow the movement of the panel 7, 7' around the hinge 9, therefore to maintain the panel 7, 7' in a first condition in which it is fixed with respect to the platform 6 and a second condition in which it is movable with respect to it.

According to the invention, the vehicle 1 comprises a containment system 10 for limiting the free stroke of the panel 7 in at least one predefined angular position around the hinge 9 so as to prevent the side panel 7 from contacting the chassis 2 of the vehicle. In particular, the free stroke of the panel 7 is limited from the contact with the containment system 10 and the predefined angular position depends on its relative position with respect to the panel.

In particular, the containment system 10 comprises a buffer 11, a control lever 12 and a mechanism 13 operatively connecting the control lever 12 to the buffer 11 so that the buffer 11, depending on the actuation of the control lever 12 can pass between a first retracted configuration, in which it is entirely placed below the plane of the platform 6, i.e. at a minimum transversal distance with respect to the chassis 2, and a second extracted configuration, in which it is placed outside the plane defined by the platform 6, i.e. at a predetermined transversal distance with respect to the chassis 2, greater than the aforementioned minimum distance.

In particular, the containment system 10 is carried by the chassis 2 in a lower position with respect to the platform 6 of the box 5. More specifically, the containment system 10 is carried by a cantilevered portion 2b extending transversely with respect to side members of the chassis 2.

The buffer 11 advantageously comprises a header member 11' carried by an arm 11" comprising a first end configured to carry the header member 11' and a second end operatively connected to the mechanism 13.

Advantageously, the arm 11" is "L"-shaped, where a first segment defines the aforementioned first end and where a second segment defines the aforementioned second end. In particular, the first segment is shorter, in the respective longitudinal extension, with respect to the second segment.

The control lever 12 advantageously comprises a gripping portion 12' and a lever 12" connected at a first end to the gripping portion 12' and at a second end operatively to the mechanism 13.

The mechanism 13 comprises a rod 15 connected at a first end to the control lever 12 and at a second end connected to a plurality of cranks 16, 17, 18 interposed by means of hinge-connections between the rod 15 and the buffer 11 as described in the following.

The rod 15 is carried in a rotationally free manner by the cantilevered portion 2b rotating around a first axis B. The first axis B is parallel to the longitudinal axis A of the vehicle 1. The control lever 12 is connected at a first end of the rod 15 so as to enable a rotation thereof around the axis B. Preferably the rod 15 has a circular section.

Advantageously, the control lever 12 is thus placed in a rear portion of the vehicle 1, preferably below the box 5. The control lever 12 moves in a front plane, i.e. perpendicular to the ground G and to the longitudinal plane of the vehicle 1.

Preferably, the control lever 12 is placed so that the lever 12" is substantially vertical with respect to the ground G so as to maintain the buffer 11 in the first configuration and to be inclined with the gripping portion 12' towards the chassis 2 so as to maintain the buffer 11 in the second configuration.

On the opposite side with respect to the one cooperating with the control lever 12, as mentioned, the rod 15 is connected to a first crank 16 comprising a first end integral with the rotation of the rod 15 and a second end hinged to a second crank 17 around a common second axis of rotation C.

The second crank 17 comprises a first end hinged to the first crank 16 and a second end hinged to the third crank 18 around a common third axis of rotation D.

The third crank 18 comprises a first end hinged to the second crank 17 and a second end hinged to the arm 11" of the buffer 11 around a common third axis of rotation E.

Specifically, the rod 15 is placed vertically below with respect to the cranks 16, 17 and 18, whereas the first and third cranks 16, 18 are placed spaced apart in transversal direction with respect to the axis A, between each other and the second crank 17 connects the latter being interposed between them. Advantageously, the second crank 17 is connected to the respective first and third cranks 16, 18 on a same side of the latter.

In particular, the cranks 16, 17, 18 are made as flat elements and are advantageously placed near the cantilevered portion 2b.

Specifically, the cranks 16, 17, 18 have a length and are spaced apart from each other such that the third crank 18 accomplishes an angular stroke of approximately 90° around the respective third axis E bringing also the buffer 11 to move by 90° around the third axis E.

In particular, the elements of the mechanism 13 are dimensioned so as to obtain a bistable mechanism 13, i.e. which maintains the first or second configuration condition of the buffer 11 unless a predefined force is exerted on the control lever 12.

Still more specifically, the cantilevered portion 2b can be made at least partially hollow so as to house at least the second segment of the arm 11" of the buffer 11' in the aforementioned configuration.

Advantageously, the vehicle 1 can comprise sensor means configured to check the actuation of the containment system 10 and an electronic unit electronically connected to the actuating means 8 and to the sensor means, the electronic unit is provided with processing means configured to inhibit the actuation of the actuating means 8 depending on the actuation of the containment system 10.

In particular, the invention also relates to a method for controlling the overturning of a box in a vehicle (in a vehicle 1 as described above), comprising the steps of:
i) checking the actuation of the containment system 10;
ii) inhibiting the operation of said actuating means 8 if:
   - The overturning of the box 5 is required and the containment system 10 has not been actuated; or
   - The return of the box 5 to its rest position is required and the containment system 10 has not been deactivated.

The operation of the embodiment of the containment system for a box panel according to the invention as described above is as follows.

As mentioned, the vehicle 1 comprises actuating means 8 which can bring the box 5 in one of the two conditions of Figures 4 and 5, i.e. in a standard condition in which the platform is parallel to the ground G and an overturned condition in which the platform is inclined with respect to the ground G.

Until the side panel is unlocked, the containment system 10 is maintained in the first configuration where the control lever 12 is substantially vertical and where the buffer 11 is entirely contained below the platform 6.

If necessary, the driver can unlock the movement of the side panel 7 so that it can overturn around the axis of the hinge 9.

In parallel, the driver actuates the passage of the buffer 11 from the first configuration to the second configuration acting on the lever 15 and bringing it from a substantially vertical position to a position close to the chassis 2. Such driven rotation is transmitted to the rod and thus to the cranks 16, 17, 18 which make the buffer 11 rotate by approximately 90°. The buffer 11 is thus positioned so that the header member 11' is placed outside the plane of the platform 6 so as to cooperate with the side panel 7 limiting the angular stroke thereof around the hinge 9.

Once the panel 7 is again locked with respect to the platform 6 or once the box 5 has returned into the standard position, the driver can act again on the lever 15 bringing the buffer 11 back into the initial position.

In the initial condition or in the final condition, the buffer 11 is maintained in the configuration pre-established by the user since the mechanism 13 is bistable until a sufficient force is exerted on the control lever 12.

In alternative to what described above, the actuation of the rod 15 can be carried out by an automatic actuating device of mechanical, electrical or hydraulic/pneumatic type on the basis of a command provided by the user, pressing a relative button or an icon on a control terminal.

Based on the foregoing, the advantages of the containment system for a box panel according to the invention are evident.

Thanks to the proposed containment system also during the opening of the panel of the box, desired or undesired, the contact between it and the chassis is prevented, preventing the damaging of the sensor means with which it is provided.

Furthermore, the proposed system is compact, cost-effective and can be easily integrated in existing vehicles. Furthermore, the proposed system does not increase the lateral bulk of the vehicle when not used.

Thanks to the proposed bistable mechanism, the buffer remains in the set position, i.e. of minimum bulk or of limitation of the angular stroke of the panel.

The presence of sensor means allows not activating the actuating means for the overturning of the box without the engagement of the containment system, preventing undesired collisions.

Finally, it is clear that modifications and variations can be made to the containment system for a box panel according to the present invention, which do not anyway depart from the scope of protection defined by the claims.

Clearly, although the containment system is described only for containing a side panel, it can provide for containing a rear panel.

Still, the rod or the cranks can be made differently with regard to number and shape, as well as the recesses with regard to the driving.

Furthermore, the actuation of the mechanism can be automated thanks to an electric motor or an electromechanical, pneumatic or hydraulic device controllable by the user by means of respective electronic commands.

## Claims

1. A vehicle (1) comprising a box (5) provided with a platform (6) configured to be carried by a chassis (2) of said vehicle and extending along a longitudinal axis (A), a pair of side panels (7) parallel to said axis (A), a pair of front and rear panels (7') transversal to said axis (A), said panels (7', 7") and said platform (6) delimiting a space (5') configured to transport goods, said panels (7', 7") being carried by said platform (6) by means of at least one hinge (9) configured to allow the rotation of an edge of said panels (7, 7') around a hinge axis respectively parallel or transversal to said axis (A), **characterized in that** said box (5) comprises a containment system (10) actuatable to limit the free stroke of said panel (7, 7') in at least one predefined angular position around said axis of rotation of said hinge (9).

2. Vehicle according to claim 1, wherein said containment system (10) is carried by said chassis (2) of said vehicle (1).

3. Vehicle according to claim 1 or 2, wherein said containment system (10) is carried below said platform (6) of said box (5).

4. Vehicle according to any of the preceding claims, wherein said containment system (10) comprises a buffer (11), a control lever (12) and a mechanism (13) operatively interposed between said control lever (12) and said buffer (11) said control lever (12) being controllable so as to bring said buffer (11) between a first operational configuration in which it is placed below said platform (6) to a second operational condition in which it is placed outside said platform (6) so as to be able to cooperate in contact with said panel (7, 7') should it rotate by an angle greater than a predetermined angle with respect to said hinge (9).

5. Vehicle according to claim 4, wherein said buffer (11) comprises a header member (11') and an arm (11") configured to be connected at one end to said mechanism (13) and to carry said header member (11') from an opposite end.

6. Vehicle according to claim 5, wherein said arm (11') has an "L" shape.

7. Vehicle according to any of claims 4 to 6, wherein said mechanism (13) comprises:
- a rod (15) rotating around a first axis (B), and
- a plurality of cranks (16, 17, 18) connected to each other by hinges and operatively interposed between said rod (15) and said buffer (11),
said rod (15) being connected at a first end to said control lever (12) and at a second end to one (16) of said cranks (16, 17, 18).

8. Vehicle according to claim 7, wherein said plurality of cranks comprises a crank (18) connected to said arm (11") of said buffer (11) by a common hinge and to the other cranks (16, 17) from the opposite end.

9. Vehicle according to claim 7 or 8, comprising a first, a second and a third crank (16, 17, 18),
- the first crank (16) hinged around said first axis (B) common to said rod (15) from a first end and around a second axis (C) common to the crank (17);
- the second crank (17) being hinged at a second end around a third axis (D) common to the third crank (18);
- the third crank (18) being hinged at a second end around a fourth axis (E) common to said buffer (11).

10. Vehicle according to any of claims 7 to 9, wherein said cranks (16, 17, 18) are flat.

11. Vehicle according to one of the preceding claims, wherein said containment system (10) is carried by a cantilevered portion (2b) extending transversely from side members (2a) of said chassis (2).

12. Vehicle according to claim 11 when dependent on claims 4 to 10, wherein said buffer (11) is partially housed in said cantilevered portion (2b).

13. Vehicle according to any of claims 4 to 12, wherein said mechanism (13) is bistable in said first and second configuration of said buffer (11).

14. Vehicle according to any one of the preceding claims, wherein said vehicle comprises actuating means (8) configured to overturn said box (5) longitudinally and/or transversely relative to said axis (A) of said vehicle.

15. Vehicle according to claim 14, comprising sensor means configured to check the actuation of said containment system (10) and an electronic unit electronically connected to said actuating means (8) and said sensor means, said electronic unit comprising processing means configured to inhibit the actuation of said actuating means (8) depending on the actuation of said containment system (10).

16. A method for controlling the overturning of a box (5) in a vehicle (1) according to claim 15, comprising the steps of:
(i) checking the actuation of the containment system (10);
(ii) inhibiting the operation of said actuating means (8) if:
- The overturning of said box (5) is required and said containment system (10) has not been actuated; or
- The return of said box (5) to its rest position is required and said containment system (10) has not been deactivated.
